Europäisches Patentamt

European Patent Office

Office européen des brevets

(11) Veröffentlichungsnummer: **0 118 904**
**B1**

(12) # EUROPÄISCHE PATENTSCHRIFT

(45) Veröffentlichungstag der Patentschrift:
17.09.86

(51) Int. Cl.⁴: **B 62 B 1/20**

(21) Anmeldenummer: **84102601.6**

(22) Anmeldetag: **09.03.84**

(54) **Zerlegbare Schubkarre.**

(30) Priorität: **11.03.83 DE 3308739**

(43) Veröffentlichungstag der Anmeldung:
**19.09.84 Patentblatt 84/38**

(45) Bekanntmachung des Hinweises auf die Patenterteilung:
**17.09.86 Patentblatt 86/38**

(84) Benannte Vertragsstaaten:
**FR IT NL**

(56) Entgegenhaltungen:
**FR - A - 2 151 708**
**FR - A - 2 300 700**
**GB - A - 620 534**
**US - A - 1 387 570**

(73) Patentinhaber: **Mefro Metallwarenfabrik Fischbacher GmbH, D-8201 Rohrdorf (DE)**

(72) Erfinder: **Fischbacher, Alfred,**
**Ludwig-Thoma-Strasse 27, D-8201 Rohrdorf (DE)**

(74) Vertreter: **Eder, Eugen, Dipl.-Ing. et al, Patentanwälte Dipl.-Ing. E. Eder Dipl.-Ing. K. Schieschke Elisabethstrasse 34, D-8000 München 40 (DE)**

**Beschreibung**

Die Erfindung bezieht sich auf eine zerlegbare Schubkarre, mit zwei getrennt voneinander ausgebildeten Holmen mit Stützfüssen, einem Laufrad und einer Aufnahmemulde, wobei die beiden, im vorderen Bereich durch das Laufrad miteinander verbundenen Holme einen X-förmig ausgebildeten, gegeneinander gerichteten Bereich aufweisen und an der Unterseite der Aufnahmemulde befestigt sind. Eine derartige Schubkarre ist aus der US-A-1 387 570 bekannt.

Als weiterer Stand der Technik ist bereits eine zerlegbare Schubkarre bekannt, bei welcher die beiden Holme im Bereich des Laufrades durch ein gabelförmiges Gestell miteinander verbunden sind, wobei die beiden Holme jeweils um ihre Lagerstelle im Gestell schwenken können (DE-C-863 904). Durch diese Schwenkmöglichkeit der getrennt voneinander ausgebildeten Holme lassen sich diese scherenförmig spreizen und damit einen Behälter aufnehmen, oder, bei fehlendem Behälter, zusammenklappen und raumsparend transportieren. Diese bekannte Anordnung ist relativ kompliziert aufgebaut, weist nur eine ungenügende Stabilität auf und bedarf einer kostenaufwendigen Fertigung.

Zum Stand der Technik zählt weiterhin eine zerlegbare Schubkarre, bei welcher die Holme zweigeteilt ausgebildet sind, wobei die einzelnen Teile miteinander verschraubt werden (DE-A-1 940 445). An diese zweigeteilten Holme werden die Stützfüsse angeschraubt, wonach die beiden Holme durch Querstege miteinander zu verbinden sind. Auf diese vormontierte Einheit wird die Aufnahmemulde befestigt. Diese zusammenlegbare Schubkarre weist damit eine grosse Anzahl von Einzelteilen auf, ist damit kostenaufwendig und bedarf zur Montage eines längeren Zeitaufwandes. Weiterhin ist ein Schubkarrenunterrahmen bekannt, welcher so ausgebildet ist, dass die beiden Holme aus je einem gebogenen Stabteil bestehen, deren vordere Enden mit den Schenkeln eines Bügelstückes lösbar zusammengesteckt sind (DE-U-79 30 503). Diese bekannte Konstruktion ist relativ instabil und damit nicht zum Transport grosser Lasten geeignet.

Bei der eingangs erwähnten, aus der US-A-1 387 570 bekannten Schubkarre sind die beiden Holme im X-förmigen Bereich miteinander und mit der Mulde durch eine Klammer verbunden. Diese Klammer wird an der Unterseite der Aufnahmemulde befestigt. Damit ergibt sich eine Schubkarre, deren Zerlegung bzw. Montage mühsam und zeitaufwendig ist.

Demgegenüber besteht die Aufgabe der vorliegenden Erfindung darin, eine zerlegbare Schubkarre zu schaffen, welche kostengünstig sowie transport- und lagerraumsparend herstellbar ist und trotzdem zum Tragen hoher Lasten herangezogen werden kann.

Diese Aufgabe wird erfindungsgemäss dadurch gelöst, dass der gegeneinander gerichtete Bereich der beiden Holme durch ein Zwischenelement verbunden ist und dass das Zwischenelement als Schraub-, Steck- oder Klemmverbindung gestaltet ist. Hierdurch ergibt sich der Vorteil, dass die beiden Holme transport- und lagerraumsparend hergestellt werden können, dass sich die Anzahl der miteinander zu verbindenden Teile verringert und dass eine stabile Konstruktion geschaffen wird.

Vorteilhafte Weiterbildungen der Erfindung ergeben sich aus den Unteransprüchen.

Die Erfindung wird nachfolgend anhand eines in der Zeichnung dargestellten Ausführungsbeispiels näher beschrieben. In der Zeichnung zeigen:

Fig. 1 eine Seitenansicht einer zerlegbaren Schubkarre;

Fig. 2 eine Unteransicht auf die Schubkarre nach Fig. 1;

Fig. 3 eine vergrösserte Ansicht der Verbindung zwischen den beiden Holmen der Schubkarre.

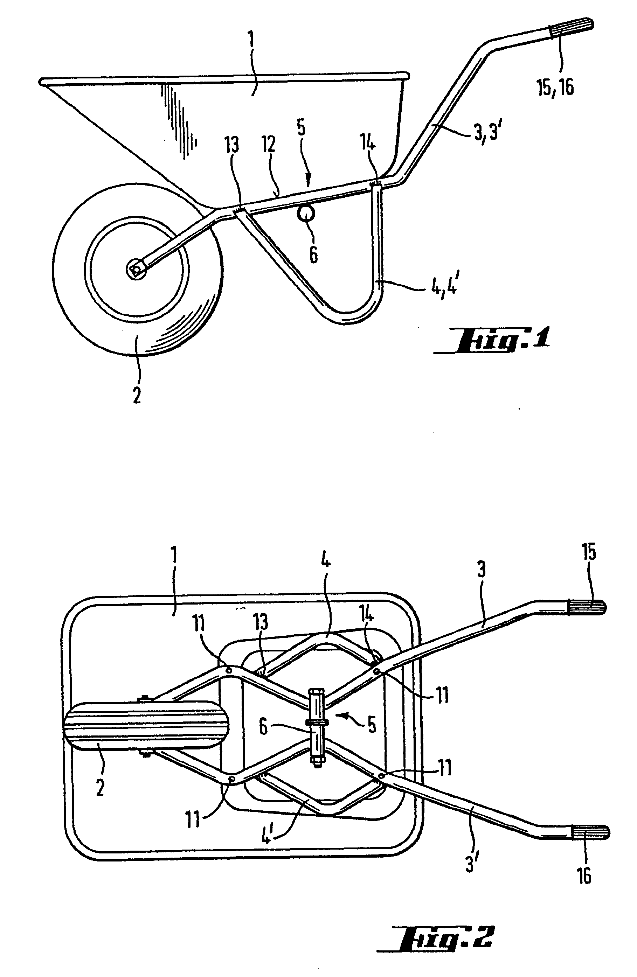

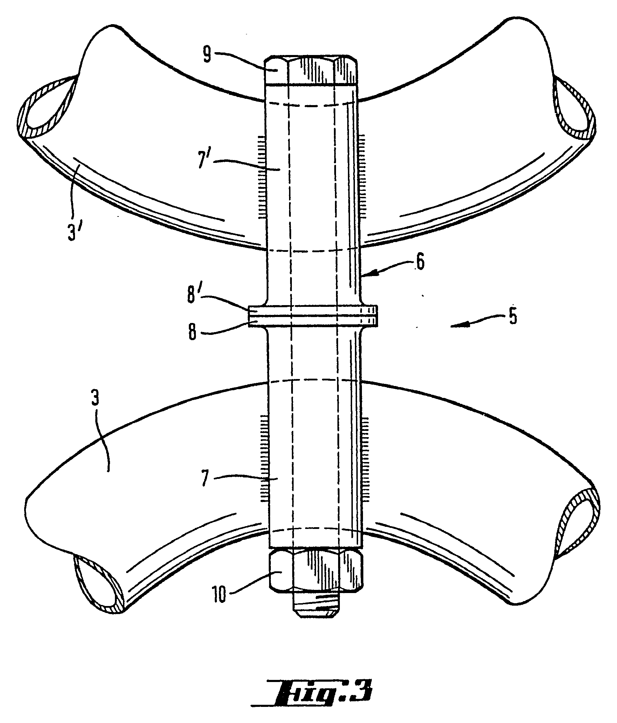

Die in Fig. 1 dargestellte, zerlegbare Schubkarre besteht im wesentlichen aus einer Aufnahmemulde 1, einem Laufrad 2, zwei nebeneinanderliegenden Holmen 3 und 3' sowie zwei Stützfüssen 4 und 4'. Nach Fig. 2 weisen die beiden Holme 3 und 3' einen X-förmig ausgebildeten, gegeneinander gerichteten Bereich 5 auf, in welchem sie durch ein Zwischenelement miteinander verbunden sind. Die beiden Holme werden damit im vorderen Bereich durch das Laufrad 2 und im mittleren Bereich durch das Zwischenelement 6 aneinander befestigt. Dieses Zwischenelement kann als Schraub-, Steck- oder Klemmverbindung gestaltet sein.

Aus Fig. 1 ist ersichtlich, dass im X-förmig ausgebildeten gegeneinander gerichteten Bereich 5 die beiden Holme eine schräge Ebene 12 bilden. Auf diese schräge Ebene 12 wird die Aufnahmemulde 1 verschraubt, und zwar nach Fig. 2 beispielsweise mit vier Schrauben 11.

Die beiden Stützfüsse 4 und 4' sind mit ihren Enden 13 und 14 jeweils an die entsprechenden Holme 3 und 3' im vorderen und hinteren Bereich der Ebene 12 angeschweisst. Hierdurch ergibt sich eine sehr stabile Konstruktion. Die beiden Holme 3 und 3' laufen in die Handgriffe 15 und 16 der Schubkarre aus.

In Fig. 3 ist beispielsweise ein Zwischenelement 6 dargestellt. In diesem Fall ist jeder Holm 3 bzw. 3' im X-förmig gegeneinander gerichteten Bereich 5 mit einer Hülse 7 bzw. 7' durch Schweissen verbunden, wobei jede Hülse in einem Flansch 8 bzw. 8' endet. Die beiden Flansche 8 und 8' sind gegeneinander gerichtet. Die beiden Hülsen 7 und 7' dienen zur Lagerung einer Schraube 9, welche ihrerseits durch eine nicht näher dargestellte Schraubensicherung sowie durch eine Mutter 10 die Verbindung zwischen den beiden Holmen 3 und 3' im X-förmigen Bereich 5 herstellt.

Die zerlegbare Schubkarre besteht nur aus wenigen Einzelteilen: der Aufnahmemulde 1, dem Laufrad 2, den beiden Holmen 3 und 3' sowie einem Zwischenelement 6. Damit ergibt sich eine transport- und lagerraumsparende Konstruktion, welche jedoch infolge der zahlreichen Krümmungen der Holme 3 und 3' sowie der Konstruktion der Stützfüsse 4 und 4' eine sehr hohe Stabilität aufweist.

Die Stützfüsse 4 und 4' aus Rohr oder anderen Profilen sind im Verbindungsbereich an die X-Form 5 angepasst, so dass durch die abgewinkelte Form eine gute Steifheit der Verbindung Holm-Stützfuss erreicht wird und dadurch eine Querstrebe von Stütze 4 zu Stütze 4' nicht erforderlich ist.

**Patentansprüche**

1. Zerlegbare Schubkarre, mit zwei getrennt voneinander ausgebildeten Holmen (3, 3') mit Stützfüssen (4, 4'), einem Laufrad (2) und einer Aufnahmemulde (1), wobei die beiden, im vorderen Bereich durch das Laufrad (2) miteinander verbundenen Holme (3, 3') einen X-förmig ausgebildeten, gegeneinander gerichteten Bereich (5) aufweisen und an der Unterseite der Aufnahmemulde (1) befestigt sind, dadurch gekennzeichnet, dass der gegeneinander gerichtete Bereich (5) der beiden Holme (3, 3') durch ein Zwischenelement (6) verbunden ist und dass das Zwischenelement (6) als Schraub-, Steck- oder Klemmverbindung gestaltet ist.

2. Schubkarre nach Anspruch 1, dadurch gekennzeichnet, dass jeder Holm (3, 3') eine Hülse (7, 7') mit Flansch (8, 8') aufweist, wobei die beiden Flansche (8, 8') der Holme einander beaufschlagen und die Hülsen (7, 7') eine Schrauben-Muttern-Verbindung (9, 10) lagern.

3. Schubkarre nach Anspruch 1 und 2, dadurch gekennzeichnet, dass bei stehender Schubkarre die Ebene (12) des X-förmigen Bereiches (5) der Holme (3, 3') schräg nach vorne zur Horizontalebene verläuft und dass die beiden Enden (13, 14) jeden Stützfusses (4, 4') im vorderen und hinteren Bereich der Ebene (12) befestigt sind.

4. Schubkarre nach Anspruch 3, dadurch gekennzeichnet, dass die Stützfüsse (4', 4') an den X-förmigen Bereich (5) der Holme (3, 3') angepasst sind.

**Claims**

1. A collapsible wheelbarrow having two handles (3', 3') formed separately from one another and having supporting feet (4, 4'), a running wheel (2) and a reception trough (1), in which respect the two handles (3, 3') connected to one another in the front region by the running wheel (2) have regions (5) reciprocally directed towards one another in X-shaped configuration and are fastened to the underside of the reception trough (1) characterised in that the reciprocally directed region (5) of the two handles (3, 3') is connected by an intermediate component (6) and in that the intermediate component (6) is designed as a bolted connection, plug-in connection or clamp connection.

2. A wheelbarrow according to claim 1, characterised in that each handle (3, 3') has a sleeve (7', 7') with flange (8, 8') in which the two flanges (8, 8') of the handles abut against one another and the sleeves (7, 7') mount a nut-and-bolt connection (9, 10).

3. A wheelbarrow according to claim 1 and 2, characterised in that, with the wheelbarrow stationary, the plane (12) of the X-shaped region (5) of the handles (3, 3') extends obliquely forwards relative to the horizontal plane and in that the two ends (13, 14) of each supporting foot (4, 4') are fastened in the front and rear region of the plane (12).

4. A wheelbarrow according to claim 3, characterised in that the supporting feet (4, 4') are adapted to the X-shaped region (5) of the handles (3, 3').

**Revendications**

1. Brouette démontable comprenant deux brancards (3, 3') construits séparément l'un de l'autre et munis de pieds d'appui (4, 4'), une roue (2) et une benne (1), les deux brancards (3, 3') qui sont reliés l'un à l'autre dans la région avant par la roue (2) présentant une région (5) en forme de X, dans laquelle ils sont dirigés l'un vers l'autre et étant fixés à la face inférieure de la benne (1), caractérisée en ce que les deux brancards (3, 3') dans la région où ils sont dirigés l'un vers l'autre, sont reliés par un élément intermédiaire (6) et en ce que l'élément intermédiaire (6) forme un assemblage à vis, à emboîtement ou à serrage.

2. Brouette selon la revendication 1, caractérisée en ce que chaque brancard (3, 3') présente un manchon (7, 7') muni d'une bride (8, 8') les deux brides (8, 8') des brancards s'appuyant l'une contre l'autre et les manchons (7, 7') servant de logement pour un assemblage à vis-écrou (9, 10).

3. Brouette selon les revendications 1 et 2, caractérisée en ce que, lorsque la brouette est debout, le plan (12) de la région en X (5) des brancards (3, 3') s'étend vers l'avant obliquement par rapport au plan horizontal et en ce que les deux extrémités (13, 14) de chaque pied d'appui (4, 4') sont fixées dans la région avant et dans la région arrière du plan (12).

4. Brouette selon la revendication 3, caractérisée en ce que les pieds d'appui (4, 4') sont adaptés à la région en X (5) des brancards (3, 3').

**Fig.1**

**Fig.2**

Fig.3

0 118 904

7